# EUROPÄISCHE PATENTSCHRIFT

(11) **EP 2 754 517 B1**
(45) Veröffentlichungstag und Bekanntmachung des Hinweises auf die Patenterteilung: **03.05.2017**
(21) Anmeldenummer: 13151325.1
(22) Anmeldetag: 15.01.2013
(51) Int. Cl.: B23B 29/034

(54) **Bearbeitungswerkzeug für eine mehrspindlige Werkzeugmaschine und Werkzeugmaschine damit**
Machining tool for a multi-spindle machine tool and machine tool with same
Outil de traitement pour une machine-outil à plusieurs broches et machine-outil en étant équipé

(43) Veröffentlichungstag der Anmeldung: 16.07.2014
(73) Patentinhaber: Schwäbische Werkzeugmaschinen GmbH, 78713 Schramberg-Waldmössingen (DE)
(72) Erfinder: Weber, Stefan, 78662 Bösingen (DE)
(74) Vertreter: Kohler Schmid Möbus Patentanwälte

(56) Entgegenhaltungen:
- DE-A1- 10 306 845
- DE-U1- 29 622 645
- DE-U1- 29 723 958
- US-A1- 2010 300 713

## Beschreibung

Die Erfindung betrifft ein Bearbeitungswerkzeug für eine mehrspindlige Werkzeugmaschine und eine mehrspindlige Werkzeugmaschine zur spanenden Bearbeitung von Werkstücken.

Zur Bearbeitung von Einstichen in Werkstücken oder zur Bearbeitung von Innenkonturen von Werkstückausnehmungen ist es bekannt, so genannte Aussteuerwerkzeuge einzusetzen, die um eine Bearbeitungsachse drehbar an einem feststehenden Werkzeugmaschinengrundkörper gelagert und angetrieben sind. Diese Aussteuerwerkzeuge können in den entsprechenden Einstich bzw. die Werkstückausnehmung (in Richtung der Bearbeitungsachse) eingeführt werden. Durch ein Schneidelement, das an dem Aussteuerwerkzeug in radialer Richtung hervorsteht und das sich bei einer Rotation des Aussteuerwerkzeugs um die Bearbeitungsachse dreht, kann der Werkstückeinstich bzw. die Innenkontur des Werkstücks spanend bearbeitet werden. Um die Innenkontur des Werkstücks an die Bearbeitungserfordernisse anzupassen und variabel zu gestalten, kann bekanntermaßen das Schneidelement des Aussteuerwerkzeuges zunehmend in einer radialen Richtung ausgesteuert bzw. zugestellt werden, wodurch der Durchmesser der bearbeiteten Innenkontur zunehmend vergrößert wird.

Zum radialen Aussteuern bzw. Zustellen des Schneidelements ist dabei nach einer bekannten mechanischen Lösung am Aussteuerwerkzeug eine Zugstange vorgesehen, die koaxial zur Bearbeitungsachse des Aussteuerwerkzeugs verlaufend gelagert ist. Wird die Zugstange linear in Richtung der Bearbeitungsachse verschoben, so wird diese Linearbewegung der Zugstange über geeignete im Aussteuerwerkzeug vorgesehene Gleitkeile und Gleitführungen in die radiale Aussteuer- bzw. Zustellbewegung des Schneidelements umgewandelt. Solchen als Planschieber oder Exzenterköpfe bekannten Aussteuerwerkzeugen ist jedoch gemein, dass die entsprechenden Zugstangen in baulich aufwändiger Weise axial durch die das Aussteuerwerkzeug antreibenden Arbeitsspindeln der Werkzeugmaschinen geführt werden müssen.

Ein solches Bearbeitungswerkzeug gemäß dem Oberbegriff des Anspruchs 1 ist aus DE 297 23 958 U1 bekannt.

Dies macht jedoch den Einsatz von automatischen Werkzeugwechselsystemen praktisch unmöglich, da diese dann nicht oder nur mit unverhältnismäßig hohem technischen Aufwand an die entsprechenden Arbeitsspindeln an- und abgekoppelt werden können. Der Einsatz von automatischen Werkzeugwechselsystemen ist allerdings, insbesondere bei mehrspindligen Werkzeugmaschinen (bzw. Bearbeitungszentren), aufgrund der zeit- und kosteneffektiveren Werkstückbearbeitung weiterhin gewünscht und gefordert.

Als Alternative zu diesen mechanischen Lösungen sind ferner elektrische Systeme bekannt, bei denen das Schneidelement des Aussteuerwerkzeugs mittels eines im Aussteuerwerkzeug angeordneten elektromotorischen Antriebs ausgesteuert wird. Zur Energieversorgung und Steuerung solcher elektromotorischen Antriebe werden Systeme mit einer berührungslosen Energie- und Datenübertragung zum Aussteuerwerkzeug eingesetzt, die jedoch in aller Regel spezifische werkzeugmaschinenseitige Zusatzeinrichtungen erfordern und typischerweise sehr teuer sind.

Es ist demgegenüber die Aufgabe der Erfindung, ein Bearbeitungswerkzeug bzw. eine Werkzeugmaschine mit einem Bearbeitungswerkzeug bereitzustellen, das bzw. die die Nachteile des Standes der Technik überwindet. Insbesondere soll das Bearbeitungswerkzeug an herkömmlichen mehrspindligen Werkzeugmaschinen mit automatischen Werkzeugwechselsystemen nutzbar sein.

Diese Aufgabe wird erfindungsgemäß gelöst durch ein Bearbeitungswerkzeug gemäß Anspruch 1.

Erfindungsgemäß kann das Schneidelement des mindestens einen Aussteuerkopfs alleine über die Beeinflussung der Drehzahlen des Innen- bzw. Außenrotors des Aussteuerkopfes zugestellt (ausgesteuert) werden, ohne dass dafür die lineare Bewegung einer Zugstange erforderlich ist. Beispielsweise kann durch das im Vergleich zum Außenrotor schnellere Drehen des Innenrotors das Schneidelement zunehmend radial nach außen oder durch das entsprechend langsamere Drehen radial nach innen verfahren werden. So können in den zu bearbeitenden Werkstücken zum Beispiel Innenkonturen mit variablen Durchmessern realisiert werden.

Das erfindungsgemäße Bearbeitungswerkzeug realisiert eine radiale Aussteuerung des Schneidelements auf mechanische Weise, obwohl es auf den Einsatz von Zugstangen verzichtet. Das Bearbeitungswerkzeug verzichtet ferner auf ein elektromotorisches Verfahren des Schneidelements oder eine berührungslose Energieübertragung und ist folglich günstig in der Herstellung und im Betrieb. Das Bearbeitungswerkzeug kann an einer mehrspindligen Werkzeugmaschine befestigt werden, die in vorteilhafter Art und Weise nicht durch aufwändige bauliche Veränderungen an die Aufnahme von Zugstangen angepasst werden muss, sondern eine Werkzeugmaschine herkömmlicher Bauart sein kann. Das erfindungsgemäße Bearbeitungswerkzeug kann somit auch vorteilhaft von einem herkömmlichen oder nur geringfügig angepassten Werkzeugwechselsystem gehandhabt werden, d.h. zum Beispiel aus einem das Bearbeitungswerkzeug beherbergenden Werkzeugmagazin gegriffen, der Werkzeugmaschine zugeführt, an dieser befestigt, sowie nach erfolgter Werkstückbearbeitung abgenommen und wieder in das entsprechende Werkzeugmagazin zurückgelegt werden. Insgesamt ergibt sich somit eine deutlich wirtschaftlichere Bearbeitung von Werkstücken mit Einstichen bzw. Innenkonturen durch das erfindungsgemäße Bearbeitungswerkzeug.

Die erfindungsgemäß für die Aussteuerung des Schneidelements erforderlichen gleichen oder unterschiedlichen Drehzahlen des Innen- bzw. Außenrotors werden dem Bearbeitungswerkzeug durch die sich im an der Werkzeugmaschine befestigten Zustand ergebende Drehkopplung zwischen den zwei Arbeitsspindeln und den Spindelanschlüssen zunächst auf das Bearbeitungswerkzeug übertragen, wobei die Drehzahlen der beiden Arbeitsspindeln in aller Regel durch die NC-Steuerung der Werkzeugmaschine einzeln vorgegeben werden können. Die auf diese Weise von den Spindelanschlüssen aufgenommenen Drehbewegungen (mit gleichen oder ungleichen Drehzahlen) werden dann durch das Getriebe des Bearbeitungswerkzeugs (gegebenenfalls mittels geeigneter Übersetzungsmechanismen) auf den Innen- und Außenrotor, d.h. auf den Aussteuerkopf übertragen. Das Schneidelement ist bei unterschiedlicher Drehzahl der Innen- und Außenrotoren radial aussteuerbar und bei gleicher Drehzahl radial festgelegt.

Bevorzugt sind zur simultanen Werkstückbearbeitung zwei Aussteuerköpfe vorgesehen, deren Innenrotoren über das Getriebe mit dem ersten Spindelanschluss und deren Außenrotoren über das Getriebe mit dem zweiten Spindelanschluss drehgekoppelt sind. Das Bearbeitungswerkzeug weist dann vorteilhaft zwei Aussteuerköpfe auf, sodass eine zeitgleiche und somit zeit- und kosteneffizientere Bearbeitung mehrerer Werkstücke möglich ist. Darüber hinaus passen die zwei Aussteuerköpfe, die im gleichen Abstand wie die Arbeitsspindeln der Werkzeugmaschine zueinander angeordnet sein können, dann in der Regel ohne nennenswerte bauliche Änderungen in herkömmliche Werkstückmagazine von automatischen Werkzeugwechselsystemen. Es versteht sich, dass bei einer beispielsweise vierspindligen Werkzeugmaschine vorteilhaft zwei entsprechend dieser Ausführungsform ausgebildete Bearbeitungswerkzeuge eingesetzt werden können, sodass auch dann alle Werkstückbearbeitungspositionen besetzt und alle Arbeitsspindeln wirtschaftlich eingesetzt werden können.

Zur drehbeweglichen Kopplung der jeweiligen Spindelanschlüsse mit den unterschiedlichen Rotoren der mehreren Aussteuerköpfe kann das Getriebe bevorzugt eine erste und eine zweite Verteilerwelle aufweisen. Die von einer ersten Arbeitsspindel zur Verfügung gestellte und von einem ersten Spindelanschluss aufgenommene Drehbewegung kann dann zum Beispiel über Zahnrad-Zahnriemen-Kombinationen auf eine erste Verteilerwelle übertragen werden. Von dort aus kann die Drehbewegung beispielsweise mit einer entsprechenden weiteren Zahnrad-Zahnriemen-Kombination auf die entsprechenden Rotoren (entweder nur die Innenrotoren oder sowohl die Innen- als auch die Außenrotoren) unterschiedlicher Aussteuerköpfe übertragen werden. Entsprechendes gilt für die zweite Arbeitsspindel, den zweiten Spindelanschluss sowie die zweite Verteilerwelle. Die Verteilerwellen sind bevorzugt zwischen den Spindelanschlüssen (mittig) angeordnet gelagert, so dass sich ein kompakter Aufbau des Bearbeitungswerkzeugs ergibt.

Besonders bevorzugt ist der mindestens eine Aussteuerkopf an Innen- und Außenrotorenden vorgesehen, welche an den Innen- und Außenrotoren lösbar befestigt sind. Durch diese lösbare Befestigung ist eine Schnittstelle zwischen dem Getriebe und den jeweiligen Aussteuerköpfen vorhanden, die beispielsweise die Auswechslung von Aussteuerköpfen des erfindungsgemäßen Bearbeitungswerkzeugs zu Wartungs- oder Reparaturzwecken ermöglicht.

In den Rahmen der Erfindung fällt auch eine mehrspindlige Werkzeugmaschine zur spanenden Bearbeitung von Werkstücken, mit mindestens zwei parallelen Arbeitsspindeln und mit mindestens einem erfindungsgemäßen Bearbeitungswerkzeug, dessen Spindelanschlüsse an den Arbeitsspindeln befestigbar sind. Das Bearbeitungswerkzeug ist bevorzugt in benachbarten Werkzeugablageplätzen eines Werkzeugmagazins ablegbar.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigen:
- Fig. 1: das erfindungsgemäße Bearbeitungswerkzeug mit einem in eine Werkstücköffnung eingeführten Aussteuerkopf im Querschnitt;
- Fig. 2: eine weitere Ausführungsform eines erfindungsgemäßen Bearbeitungswerkzeugs mit zwei Aussteuerköpfen im Querschnitt;
- Fig. 3a,3b: einen Längs- und einen Querschnitt durch einen Aussteuerkopf gemäß Fig. 1 oder Fig. 2; und
- Fig. 4: eine erfindungsgemäße Werkzeugmaschine mit einem Bearbeitungswerkzeug gemäß Fig.1.

In der folgenden Beschreibung der Zeichnung werden für gleiche bzw. funktionsgleiche Bauteile identische Bezugszeichen verwendet.

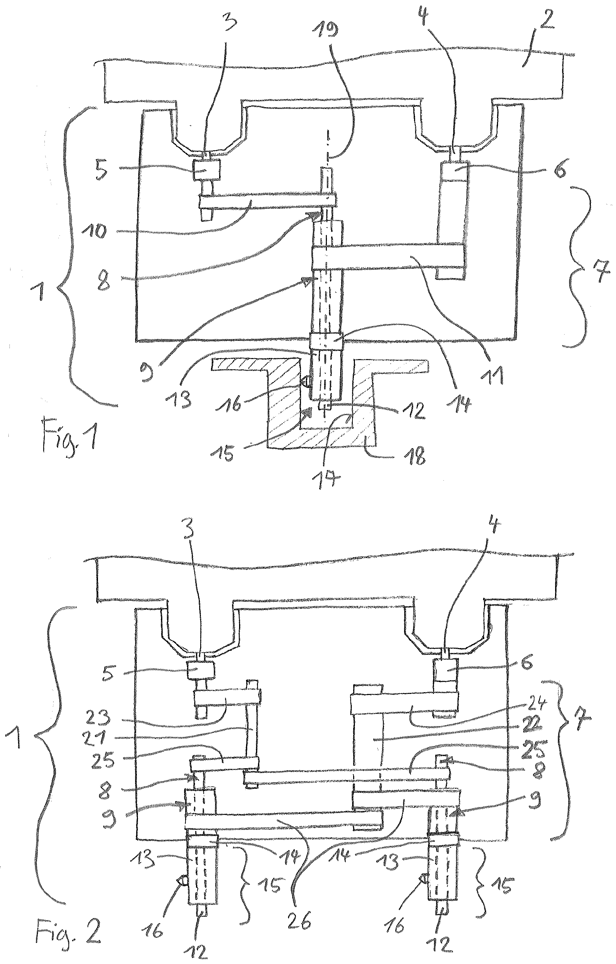

In **Fig. 1** ist ein Bearbeitungswerkzeug **1** für eine Werkzeugmaschine **2** mit einer ersten und einer zweiten Arbeitsspindel **3, 4** dargestellt. Das Bearbeitungswerkzeug 1 weist werkzeugmaschinenseitig einen ersten Spindelanschluss **5** und einen zweiten Spindelanschluss **6** auf, durch die eine Drehkopplung mit der ersten und der zweiten Arbeitsspindel 3, 4 herstellbar ist. Zur Herstellung der Drehkopplung zwischen den Spindelanschlüssen 5, 6 und den Arbeitsspindeln 3, 4 ist das Bearbeitungswerkzeug 1 über Befestigungsmittel (z.B. Rasteinrichtungen) an der Werkzeugmaschine 2 lösbar befestigt.

Das Bearbeitungswerkzeug 1 umfasst ferner ein Getriebe **7,** durch das der erste Spindelanschluss 5 mit einem inneren Rotor **8** und der zweite Spindelanschluss 6 mit einem äußeren Rotor **9** drehgekoppelt ist. Die Drehkopplung zwischen dem ersten Spindelanschluss 5 und dem inneren Rotor 8 erfolgt über einen ersten Zahnriemen **10,** der mit einem am ersten Spindelanschluss 5 abtriebsseitig angeordneten Zahnrad (nicht gezeigt) und einem am inneren Rotor 8 angeordneten Zahnrad (nicht gezeigt) zusammenwirkt. Die Drehkopplung zwischen dem zweiten Spindelanschluss 6 und dem äußeren Rotor 9 erfolgt über einen zweiten Zahnriemen **11,** der mit einem am zweiten Spindelanschluss 6 abtriebsseitig angeordneten Zahnrad (nicht gezeigt) und einem am äußeren Rotor 9 angeordneten Zahnrad (nicht gezeigt) zusammenwirkt.

Die Innen- und Außenrotoren 8, 9 weisen jeweils aus dem Bearbeitungswerkzeug 1 vorstehende Rotorenden **12, 13** auf, die z.B. über eine Doppelkupplung **14,** lösbar mit den innerhalb des Bearbeitungswerkzeugs 1 liegenden Rotorteilen befestigt sein können. Die Innen- und Außenrotoren 8, 9 bzw. die Rotorenden 12, 13 sind Teil eines Aussteuerkopfes **15** des Bearbeitungswerkzeugs 1, der ein radial hervorstehendes Schneidelement **16** zur drehend spanenden Bearbeitung einer Innenkontur **17** eines Werkstücks **18** aufweist.

Während der drehend spanenden Werkstückbearbeitung rotiert Aussteuerkopf 15 mit dem Schneidelement 16 der um eine Bearbeitungsachse **19** und trägt somit an der Innenkontur 17 kreisförmig Werkstückmaterial ab. Zur variablen Bearbeitung der Innenkontur 17, beispielsweise zur Aufweitung bzw. Vergrößerung der Innenkontur 17 oder zur Gestaltung eines gekrümmten Konturverlaufs, ist das Schneidelement 16 in einer bezüglich der Bearbeitungsachse 19 radialen Richtung aussteuerbar, d.h. das Schneidelement 16 kann radial verfahren (bzw. zugestellt) werden.

Die radiale Aussteuerbarkeit des Schneidelements 16 wird durch unterschiedliche Drehzahlen der Innen- und Außenrotoren 8, 9 bewirkt. Dreht sich der Innenrotor 8 beispielsweise mit einer Drehzahl von 500 U/min und der Außenrotor 9 mit einer Drehzahl von 510 U/min (jeweils in die gleiche Richtung), so bewirkt die eingestellte Drehzahldifferenz (hier beispielhaft 10 U/min), dass das Schneidelement 16 zunehmend radial nach außen verfahren (d.h. ausgesteuert) wird. Umgekehrt kann beispielsweise bei einer Drehzahl des Innenrotors 8 von 500 U/min und einer Drehzahl des Außenrotors 9 von beispielsweise 490 U/min die sich dann einstellende (negative bzw. entgegengesetzte) Drehzahldifferenz (-10 U/min) ein Aussteuern des Schneidelements 16 radial nach innen bewirken. Entsprechend wird das Schneidelement 16 radial nicht ausgesteuert, sondern bleibt in seiner radialen Position, wenn der Innenrotor 12 und der Außenrotor 13 mit der gleichen Drehzahl rotieren, also wenn die Drehzahldifferenz Null ist.

Durch den ersten Spindelanschluss 5, den ersten Zahnriemen 10 (und dessen Zahnräder) sowie den Innenrotor 8 ist ein erster Getriebestrang gebildet, durch den der Innenrotor 8 mit der ersten Arbeitsspindel 3 drehgekoppelt ist, wenn das Bearbeitungswerkzeug 1 an der Werkzeugmaschine 2 befestigt ist. Durch den zweiten Spindelanschluss 6, den zweiten Zahnriemen 11 (und dessen Zahnräder) sowie den Außenrotor 9 ist ein zweiter Getriebestrang gebildet, durch den der Außenrotor 9 mit der zweiten Arbeitsspindel 4 drehgekoppelt ist, wenn das Bearbeitungswerkzeug 1 an der Werkzeugmaschine 2 befestigt ist. Durch ein Antreiben der Arbeitsspindeln 3, 4 werden deren jeweilige Drehbewegungen auf den ersten und zweiten Getriebestrang und somit auch auf den Innen- bzw. Außenrotor 8, 9 übertragen. Die für das Aussteuern oder Festlegen des Schneidelements 16 erforderlichen unterschiedlichen oder gleichen Drehzahlen des Innen- bzw. Außenrotors 8, 9 können somit durch die jeweiligen Drehzahlen der Arbeitsspindeln 3, 4 erreicht werden.

Das Schneidelement 16 kann in vorteilhafter Weise alleine über die Beeinflussung der Drehzahlen des Innen- bzw. Außenrotors 8, 9 ausgesteuert werden. Insbesondere verzichtet das Bearbeitungswerkzeug 1 auf eine in Richtung der Bearbeitungsachse 19 axial verfahrbare Zugstange zur Aussteuerung des Schneidelements 16, wie sie bei herkömmlichen Aussteuerwerkzeugen eingesetzt wird. Das Bearbeitungswerkzeug 1 ist für den Fall, dass das Werkstück 18 ortsfest eingespannt ist, zur variablen Bearbeitung der Tiefe der Innenkontur 17 durch einen werkzeugmaschinenseitigen Vorschub in einer Richtung parallel zur Bearbeitungsachse 19 verfahrbar. Für den Fall eines ortsfest gehaltenen Bearbeitungswerkzeugs 1 kann auch das Werkstück 18 relativ zu dem Bearbeitungswerkzeug 1 in der Richtung parallel zur Bearbeitungsachse 19 verfahren werden.

**Fig. 2** zeigt ein weiteres Bearbeitungswerkzeug 1, das im Unterschied zum Bearbeitungswerkzeug der Fig. 1 nicht nur einen, sondern zwei Aussteuerköpfe 15 mit jeweils Innen- und Außenrotoren 8, 9 aufweist. Das Funktionsprinzip des Bearbeitungswerkzeugs 1 aus Fig. 2 entspricht dem Funktionsprinzip des Bearbeitungswerkzeugs 1 der Fig. 1, d.h. auch hier werden über einen ersten und einen zweiten Getriebestrang die Drehbewegungen der beiden Arbeitsspindeln 3, 4 auf die Rotoren 8, 9 übertragen, sodass durch die Vorgabe bestimmter Drehzahlen die Aussteuerbewegung der Schneidelemente 16 synchron beeinflusst werden kann. Die Getriebestränge unterscheiden sich insofern von denen der Fig. 1, dass nicht nur ein Innenrotor 8, sondern beide Innenrotoren 8 mit dem ersten Spindelanschluss 3 und dass nicht nur ein Außenrotor 13, sondern beide Außenrotoren 9 mit dem zweiten Spindelanschluss 4 drehgekoppelt sind.

Hierzu weist das Getriebe 7 eine erste und eine zweite Verteilerwelle **21, 22** auf, die zwischen den beiden Spindelanschlüssen 5, 6 angeordnet und drehbar gelagert sind. Durch einen ersten Verteilerzahnriemen **23** (und entsprechende Zahnräder) wird die Drehbewegung des ersten Spindelanschlusses 5 auf die erste Verteilerwelle 21 und durch einen zweiten Verteilerzahnriemen **24** (und entsprechende Zahnräder) die Drehbewegung des zweiten Spindelanschlusses 6 auf die zweite Verteilerwelle 22 übertragen. Von den ersten bzw. zweiten Verteilerwellen 21, 22 werden die jeweiligen Drehbewegungen dann weiter durch zwei erste bzw. zwei zweite Hilfsriemen **25, 26** (und entsprechende Zahnräder) auf die Innen- und Außenrotoren 8, 9 bzw. auf ihre aus dem Bearbeitungswerkzeug 1 vorstehenden Rotorenden 12, 13 übertragen. Die radiale Aussteuerbarkeit des Schneidelements 16 wird durch unterschiedliche Drehzahlen der Innen- und Außenrotoren 8, 9 bewirkt. Durch das Bearbeitungswerkzeug 1 der Fig. 2 kann vorteilhaft eine simultane Werkstückbearbeitung durchgeführt werden.

Alternativ zu Fig. 2 können auch eine abtriebsseitige Welle des ersten Spindelanschlusses 5 und der Innenrotor 8 einstückig ausgebildet und zur Übertragung der Drehbewegung auf den anderen Innenrotor 8 ein Zahnriemen vorgesehen sein. Entsprechend können dann die abtriebsseitige Welle des zweiten Spindelanschlusses 6 und der Außenrotor 9 einstückig ausgebildet und zur Übertragung der Drehbewegung auf den anderen Außenrotor 9 ein weiterer Zahnriemen vorgesehen sein.

Ebenfalls alternativ zu Fig. 2 können über das Getriebe auch der Innenrotor 8 des einen Aussteuerkopfes 15 und der Außenrotor 9 des anderen Aussteuerkopfes 15 mit dem ersten Spindelanschluss 5 sowie der Außenrotor 9 des einen Aussteuerkopfes 15 und der Innenrotor 8 des anderen Aussteuerkopfes 15 mit dem zweiten Spindelanschluss 6 drehgekoppelt sein.

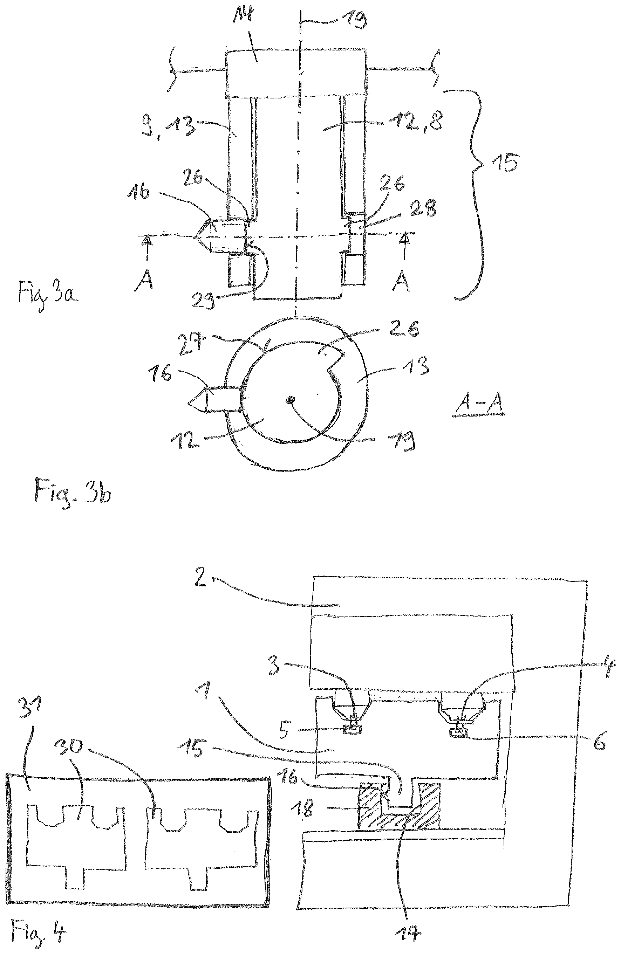

In **Fign. 3a, 3b** ist ein Aussteuerkopf 15 dargestellt, der beispielsweise bei den Bearbeitungswerkzeugen 1 gemäß den Fign. 1 und 2 vorgesehen sein kann. Fig. 3a zeigt einen Längsschnitt durch die Rotorenden 12,13 der Innen- und Außenrotoren 8, 9 sowie das Schneidelement 16, wobei die Schnittebene A-A durch die Bearbeitungsachse 19 verläuft. Die Rotorenden 12, 13 sind einenends an der Doppelkupplung 14 befestigt und somit koaxial um die Bearbeitungsachse 19 drehbar gelagert. Das Innenrotorende 12 weist einen sich schneckengehäuseartig radial aufweitenden Vorsprung **26** (vgl. den in Fig. 3b in Umfangsrichtung zunehmenden Radius des Vorsprungs 26) mit einer außenseitigen Gleitfläche **27** auf, der in einer zumindest abschnittsweise umlaufenden Ausnehmung **28** des Außenrotorendes 13 verläuft. Das Schneidelement 16 ist in der Ausnehmung 28 in radialer Richtung geführt gelagert (beispielsweise durch eine Zwangsführung mittels ineinandergreifender Stege und Nuten) und weist an seiner der schneidenden Spitze gegenüberliegenden Seite eine Gleitfläche **29** auf, die an der Gleitfläche 27 des Vorsprungs 26 anliegt. Das Schneidelement 16 kann beispielsweise durch die Vorspannkraft eines zwischen dem Außenrotorende 13 und dem Schneidelement 16 wirkenden Federmittels mit seiner Gleitfläche 29 gegen die Gleitfläche 27 des Vorsprungs 26 gedrückt werden.

Stellt sich durch die vorgegebenen Drehzahlen der Innen- bzw. Außenrotoren 8, 9 eine (positive) Drehzahldifferenz ein, so dreht sich der Vorsprung 26 des Innenrotors 8 relativ zum am Außenrotor 13 gelagerten Schneidelement 16 in der Fig. 3b beispielsweise im Gegenuhrzeigersinn, sodass das Schneidelement 16 zunehmend radial nach außen ausgesteuert wird. Bei einer entsprechend entgegengesetzten (negativen) Drehzahldifferenz wandert das Schneidelement 16 dagegen (unterstützt durch die Vorspannkraft des Federmittels) radial nach innen. Ist die Drehzahldifferenz null, d.h. der Innenrotor 12 und der Außenrotor 13 rotieren mit der gleichen Drehzahl, so ist das Schneidelement 16 radial festgelegt bzw. es wird nicht radial ausgesteuert.

Schließlich zeigt **Fig. 4** die Werkzeugmaschine 2 in einer Gesamtansicht. Das Bearbeitungswerkzeug 1 gemäß Fig. 1 ist über seine Spindelanschlüsse 5,6 an den zwei parallelen Arbeitsspindeln 3, 4 der Werkzeugmaschine 2 befestigt, und der Aussteuerkopf 15 des Bearbeitungswerkzeugs 1 ist in die die Innenkontur 17 bildende Ausnehmung des zu bearbeitenden Werkstücks 18 eingefahren.

Obwohl durch das Bearbeitungswerkzeug 1 eine radiale Aussteuerung des Schneidelements 16 möglich ist, kann die Werkzeugmaschine 2 von herkömmlicher Bauart sein und muss insbesondere nicht an eine Zugstange zur Aussteuerung des Schneidelements 16 angepasst werden. Das erfindungsgemäße Bearbeitungswerkzeug 1 kann somit auch vorteilhaft von einem herkömmlichen oder nur geringfügig angepassten Werkzeugwechselsystem gehandhabt werden, wobei das Bearbeitungswerkzeug 1 zum Beispiel in benachbarten Werkzeugablageplätzen **30** eines Werkzeugmagazins **31** ablegbar ist.

## Patentansprüche

1. Bearbeitungswerkzeug (1) für eine mehrspindlige Werkzeugmaschine (2), mit mindestens einem Aussteuerkopf (15), der einen Innen- und einen Außenrotor (8, 9) und ein radial hervorstehendes Schneidelement (16) zur drehend spanenden Werkstückbearbeitung aufweist, und
mit einem Getriebe (7), durch das der eine, erste Spindelanschluss (5) mit dem Innenrotor (8) und der andere, zweite Spindelanschluss (6) mit dem Außenrotor (9) drehgekoppelt sind,
wobei der Aussteuerkopf (15) einen Aussteuermechanismus aufweist, der das Schneidelement (16) bei unterschiedlicher Drehzahl der Innen- und Außenrotoren (8, 9) radial aussteuert und bei gleicher Drehzahl nicht radial aussteuert, **dadurch gekennzeichnet dass** das Bearbeitungswerkzeug (1) mindestens zwei parallelbeabstandeten Spindelanschlüssen (5, 6) zur Drehkopplung mit zwei parallelbeabstandeten Arbeitsspindeln (3, 4) der Werkzeugmaschine (2) aufweist.

2. Bearbeitungswerkzeug nach Anspruch 1, **dadurch gekennzeichnet, dass** zur simultanen Werkstückbearbeitung zwei Aussteuerköpfe (15) vorgesehen sind, deren Innenrotoren (8) über das Getriebe (7) mit dem ersten Spindelanschluss (5) und deren Außenrotoren (9) über das Getriebe (7) mit dem zweiten Spindelanschluss (6) drehgekoppelt sind.

3. Bearbeitungswerkzeug nach Anspruch 1, **dadurch gekennzeichnet, dass** zur simultanen Werkstückbearbeitung zwei Aussteuerköpfe (15) vorgesehen sind, wobei über das Getriebe (7) der Innenrotor (8) des einen Aussteuerkopfes (15) und der Außenrotor (9) des anderen Aussteuerkopfes (15) mit dem ersten Spindelanschluss (5) sowie der Außenrotor (9) des einen Aussteuerkopfes (15) und der Innenrotor (8) des anderen Aussteuerkopfes (15) mit dem zweiten Spindelanschluss (6) drehgekoppelt sind.

4. Bearbeitungswerkzeug nach einem der vorhergehenden Ansprüche, **dadurch gekennzeichnet, dass** das Getriebe (7) Zahnräder und Zahnriemen (10, 11; 23, 24, 25, 26) aufweist.

5. Bearbeitungswerkzeug nach einem der Ansprüche 2 bis 4, **dadurch gekennzeichnet, dass** das Getriebe (7) zur drehbeweglichen Kopplung der jeweiligen Spindelanschlüsse (5,6) mit den unterschiedlichen Rotoren (8, 9) eine erste und eine zweite Verteilerwelle (21, 22) aufweist.

6. Bearbeitungswerkzeug nach Anspruch 5, **dadurch gekennzeichnet, dass** die Verteilerwellen (21, 22) zwischen den Spindelanschlüssen (5, 6) angeordnet gelagert sind.

7. Bearbeitungswerkzeug nach einem der vorhergehenden Ansprüche, **dadurch gekennzeichnet, dass** der mindestens eine Aussteuerkopf (15) an Innen- und Außenrotorenden (12, 13) vorgesehen ist, welche an den Innen- und Außenrotoren (8, 9) lösbar befestigt sind.

8. Bearbeitungswerkzeug nach einem der vorhergehenden Ansprüche, **dadurch gekennzeichnet, dass** der Innen- und/oder der Außenrotor (8, 9) und/oder das Schneidelement (16) zur radialen Aussteuerung des Schneidelements (16) miteinander in Wirkverbindung bringbare Gleitflächen (27, 29) aufweisen.

9. Bearbeitungswerkzeug nach Anspruch 8, **dadurch gekennzeichnet, dass** zwischen dem Innenrotor (8) und/oder dem Außenrotor (8) und/oder dem Schneidelement (16) eine mechanische Zwangsführung in axialer und/oder radialer Richtung ausgebildet ist.

10. Mehrspindlige Werkzeugmaschine (2) zur spanenden Bearbeitung von Werkstücken (18), mit mindestens zwei parallelbeabstandeten Arbeitsspindeln (3, 4) und mit mindestens einem Bearbeitungswerkzeug (1) nach einem der vorhergehenden Ansprüche, dessen parallelbeabstandete Spindelanschlüsse (5, 6) an den parallelbeabstandeten Arbeitsspindeln (3, 4) befestigbar sind.

11. Mehrspindlige Werkzeugmaschine nach Anspruch 10, **dadurch gekennzeichnet, dass** das Bearbeitungswerkzeug (1) in benachbarten Werkzeugablageplätzen (30) eines Werkzeugmagazins (31) ablegbar ist.

## Claims

1. Machining tool (1) for a multiple-spindle machine tool (2), comprising at least one actuating head (15) having an inner rotor and an outer rotor (8, 9) and a radially projecting cutting element (16) for rotary machining workpiece processing, and
a transmission (7) through which the first spindle connection (5) is rotationally coupled with the inner rotor (8) and the other, second spindle connection (6) is rotationally coupled with the outer rotor (9),
wherein the actuating head (15) comprises an actuating mechanism which radially actuates the cutting element (16) in case of different rotational speeds of the inner rotor and outer rotor (8, 9), and does not radially actuate it in case of identical rotational speeds, **characterized in that** the processing tool (1) comprises at least two spindle connections (5, 6) spaced apart parallel to each other for rotary coupling with two working spindles (3, 4) of the machine tool (2), which are spaced apart parallel to each other.

2. Machining tool according to claim 1, **characterized in that** for simultaneous workpiece processing two actuating heads (15) are provided, the inner rotors (8) of which are rotationally coupled via the transmission (7) with the first spindle connection (5) and the outer rotors (9) of which are rotationally coupled via the transmission (7) with the second spindle connection (6).

3. Machining tool according to claim 1, **characterized in that** for simultaneous workpiece processing two actuating heads (15) are provided, wherein the inner rotor (8) of one actuating head (15) and the outer rotor (9) of the other actuating head (15) are rotationally coupled via the transmission (7) with the first spindle connection (5) and the outer rotor (9) of one actuating head (15) and the inner rotor (8) of the other actuating head (15) are rotationally coupled via the transmission (7) with the second spindle connection (6).

4. Machining tool according to any one of the preceding claims, **characterized in that** the transmission (7) comprises toothed wheels and toothed belts (10, 11; 23, 24, 25, 26).

5. Machining tool according to any one of the claims 2 to 4, **characterized in that** the transmission (7) comprises a first and a second distributor shaft (21, 22) for rotary coupling of the respective spindle connections (5, 6) with the different rotors (8, 9).

6. Machining tool according to claim 5, **characterized in that** the distributor shafts (21, 22) are arranged between the spindle connections (5, 6).

7. Machining tool according to any one of the preceding claims, **characterized in that** the at least one actuating head (15) is provided at inner rotor ends and outer rotor ends (12, 13) which are detachably mounted to the inner and outer rotors (8, 9).

8. Machining tool according to any one of the preceding claims, **characterized in that** the inner and/or outer rotor (8, 9) and/or the cutting element (16) comprise sliding surfaces (27, 29) which can be brought into operative connection with one another for radial actuation of the cutting element (16).

9. Machining tool according to claim 8, **characterized in that** a mechanical forced guidance is formed in an axial and/or radial direction between the inner rotor (8) and/or the outer rotor (9) and/or the cutting element (16).

10. Multiple-spindle machine tool (2) for machining workpieces (18) comprising at least two parallel spaced-apart working spindles (3, 4) and at least one processing tool (1) according to any one of the preceding claims, the parallel spaced-apart spindle connections (5, 6) of which can be mounted to the parallel spaced-apart working spindles (3, 4).

11. Multiple-spindle machine tool according to claim 10, **characterized in that** the processing tool (1) can be deposited in neighboring storage areas (30) of a tool magazine (31).

## Revendications

1. Outil d'usinage (1) pour une machine-outil (2) à plusieurs broches, avec au moins une tête d'asservissement (15), qui présente un rotor intérieur (8) et un rotor extérieur (9), ainsi qu'un élément coupant (16) radialement saillant pour l'usinage tournant de pièces par enlèvement de matière,
et avec une transmission (7), par laquelle l'une ou première prise de broche (5) est couplée en rotation au rotor intérieur (8) et l'autre ou deuxième prise de broche (6) au rotor extérieur (9),
sachant que la tête d'asservissement (15) présente un mécanisme d'asservissement qui asservit radialement l'élément coupant (16) si les vitesses de rotation des rotors intérieur et extérieur (8, 9) sont différentes et qui ne l'asservit pas radialement si elles sont identiques,
**caractérisé en ce que** l'outil d'usinage (1) présente au moins deux prises de broche (5, 6) distantes et parallèles pour le couplage en rotation avec deux broches de travail (3, 4) distantes et parallèles de la machine-outil (2).

2. Outil d'usinage selon la revendication 1, **caractérisé en ce qu'**il est prévu, pour l'usinage simultané de pièces, deux têtes d'asservissement (15) dont les rotors intérieurs (8) sont couplés en rotation par l'intermédiaire de la transmission (7) à la première prise de broche (5) et dont les rotors extérieurs (9) sont couplés en rotation par l'intermédiaire de la transmission (7) à la deuxième prise de broche (6).

3. Outil d'usinage selon la revendication 1, **caractérisé en ce qu'**il est prévu deux têtes d'asservissement (15) pour l'usinage simultané de pièces, sachant que, par l'intermédiaire de la transmission (7), le rotor intérieur (8) de l'une des têtes d'asservissement (15) ainsi que le rotor extérieur (9) de l'autre tête d'asservissement (15) sont couplés en rotation à la première prise de broche (5), et le rotor extérieur (9) de l'une des têtes d'asservissement (15) ainsi que le rotor intérieur (8) de l'autre tête d'asservissement (15) sont couplés en rotation à la deuxième prise de broche (6).

4. Outil d'usinage selon l'une des revendications précédentes, **caractérisé en ce que** la transmission (7) présente des roues dentées et des courroies dentées (10, 11 ; 23, 24, 25, 26).

5. Outil d'usinage selon l'une des revendications 2 à 4, **caractérisé en ce que** la transmission (7) présente, pour le couplage mobile en rotation des prises de broche respectives (5, 6) avec les différents rotors (8, 9), un premier arbre de distribution (21) et un deuxième arbre de distribution (22).

6. Outil d'usinage selon la revendication 5, **caractérisé en ce que** les arbres de distribution (21, 22) sont montés en étant disposés entre les prises de broche (5, 6).

7. Outil d'usinage selon l'une des revendications précédentes, **caractérisé en ce que** la tête d'asservissement au moins unique (15) est prévue sur des extrémités (12, 13) de rotor intérieur et de rotor extérieur qui sont fixées de manière amovible sur les rotors intérieur et extérieur (8, 9).

8. Outil d'usinage selon l'une des revendications précédentes, **caractérisé en ce que** le rotor intérieur (8) et/ou le rotor extérieur (9) et/ou l'élément coupant (16) présentent, pour l'asservissement radial de l'élément coupant (16), des surfaces de glissement (27, 29) qui peuvent être amenées à coopérer entre elles.

9. Outil d'usinage selon la revendication 8, **caractérisé en ce qu'**un guidage mécanique forcé est configuré en direction axiale et/ou radiale entre le rotor intérieur (8) et/ou le rotor extérieur (9) et/ou l'élément coupant (16).

10. Machine-outil (2) à plusieurs broches pour l'usinage de pièces (18) par enlèvement de matière, avec au moins deux broches de travail (3, 4) distantes et parallèles et avec au moins un outil d'usinage (1) selon l'une des revendications précédentes, dont les prises de broche (5, 6) distantes et parallèles peuvent être fixées sur les broches de travail (3, 4) distantes et parallèles.

11. Machine-outil à plusieurs broches selon la revendication 10, **caractérisée en ce que** l'outil d'usinage (1) peut être rangé dans des emplacements de rangement d'outil voisins (30) d'un magasin d'outils (31).
